# EUROPEAN PATENT SPECIFICATION

(11) **EP 3 517 754 B1**
(45) Date of publication and mention of the grant of the patent: **14.06.2023**
(21) Application number: 19153697.8
(22) Date of filing: 25.01.2019
(51) Int. Cl.: F02B 23/06

(54) **ENGINE PISTON**
MOTORKOLBEN
PISTON DE MOTEUR

(30) Priority: 25.01.2018 IT 201800001869
(43) Date of publication of application: 31.07.2019
(73) Proprietor: FPT Motorenforschung AG, 9320 Arbon (CH)
(72) Inventor: GSTREIN, Wolfgang, 6900 BREGENZ (AT); HARTER, Michael, 88074 MECKENBEUREN/REUTE (DE)
(74) Representative: Bongiovanni, Simone

(56) References cited:
- EP-A2- 0 261 538
- WO-A1-2009/058055
- WO-A1-2017/152203
- US-A1- 2009 095 251

## Description

### Field of the invention

The present invention relates to a combustion chamber, in the field of the internal combustion engines. In particular, the present invention relates to an improved chamber at least partially embedded in an engine piston.

### Description of the prior art

Many combustion chamber shapes have been developed in the past in order to improve phenomena involved in the cycles of an internal combustion engine.

Figure 1 discloses, according to US2017145901, a direct injection diesel engine piston 4 having a reentrant cavity 6, rotational symmetric according to a center line axis CL. The diesel engine comprises a multi-hole fuel injection nozzle disposed coaxially with said center line axis. The cavity comprises an annular lip 42 defining a smallest diameter at a position below a piston crown surface 43 and a raised portion 41 formed at a center of the bottom of the cavity and shaped like a frustum of a cone. The height position of a top surface 41b is generally similar to the height position of the annular lip. This structure is to promote the oxidation of soot by utilizing the air in the central part of the cavity.

A toroidal volume is defined between the frusto-conical portion and the annular lip. Thus, the cavity is annularly shrink by the annular lip 42 which separate the pocket portion 45 from the enlarged inlet portion 44 of the cavity. The circumference 44a indicates the intersection between the cavity and the crown surface 43.

Such known solution aims to achieve a good interaction with injector jets when the piston is near top dead center by forming a region where an excess air rate is highest at the center line of the raised portion.

Another known solution is disclosed on EP2215338. Here, several protrusions are disclosed and located at the inner bowl, between the annular lip and the base of the frusto-conical portion arranged in the center of the inner bowl. The solution disclosed in EP2215338 imposes precise spraying angles of the fuel. Also WO2017152203 A1 discloses a similar solution.

### Summary of the invention

It is the main object of the present invention to further reduce the combustion duration by a further flame jet split in circumferential direction, having a total split into four sections. This leads to improved thermal efficiency of the engine and to reduced smoke.

In view of the rotational symmetry of the known solution, such air excess has also a rotational symmetry. Thus for any axial section the air distribution is the same.

The main principle of the invention is to implement a piston according to claim 1, which comprises a reentrant cavity, having an axial symmetry according to a center line, with an inner frusto-conical raised portion and an annular lip, and to distribute, along the annular lip, at the annular lip two or more projecting elements, shaped to develop a deflecting effect.

As in EP2215338, the projecting elements have a generic elongated shape, however, in contrast with EP2215338, said projecting elements partly lay over the enlarged inlet portion defined between the annular lip and the piston crown surface.

Said projecting elements are suitable to deflect a gas mixture including fresh air, fuel injected, burnt gasses and, according to the phase of the stage of stroke, also the flame jet.

Advantageously, said projecting elements are suitable to split the flame jet in more than two directions, better utilizing the air in the combustion bowl and avoid cylinder liner impingement if the jet comes over the annular lip.

The different positioning of the projecting elements with respect to EP2215338 permits to better account for the piston relative movement with respect to the fuel injector.

According to the invention, the projecting elements lay partly within the inner bowl, such that the length of the portion laying within the inner bowl is circa equal as the length of the portion laying over the enlarged inlet portion.

This implies that the lower end of the projecting elements remains far from the base of the frusto-conical portion.

According to a preferred embodiment of the invention, between the lower end of the projecting elements and the base of the frusto-conical portion the floor of the inner bowl is quasiflat and preferably perpendicular to the piston certer-line. Preferably, said projecting element are shaped as flat elements, preferably partial-rings, each lying on an axial plane belonging to a sheaf of planes construed on the piston center-line.

The partial rings are smoothly adjoined with the shape of the annular lip and are fully contained within the plane on which the piston crown lays.

In contrast with the known solutions, the flow distribution is not constant by rotating an axial sectional plane, but disclose regions with higher flow concentration according to those angles between two adjacent projecting elements.

In particular, while the deflecting elements are shaped similarly to EP2215338, however, their positioning is completely different, being, according to the present invention, arranged at the annular lip.

Another object of the present invention is a combustion engine provided with said piston.

A further object of the present invention is a vehicle comprising such combustion engine.

These and further objects are achieved by means of the attached claims, which describe preferred embodiments of the invention.

### Brief description of the drawings

The invention will become fully clear from the following detailed description, given by way of a mere exemplifying and non limiting example, to be read with reference to the attached drawing figures, wherein:
- Fig. 1 shows a longitudinal section of a piston according to the prior art;
- Fig. 2 shows a perspective view of an example of piston according to the present invention,
- Fig. 3 shows a portion of figure 2 in detail;
- Figs. 4 and 5 disclose a top view portion of figure 2 according to two zoom levels.

In order to simplify the understanding of the present invention, the same numerals and letters of prior art are implemented to designate corresponding features of the present invention. The same reference numerals and letters in the figures designate the same or functionally equivalent features.

### Detailed description of the preferred embodiments

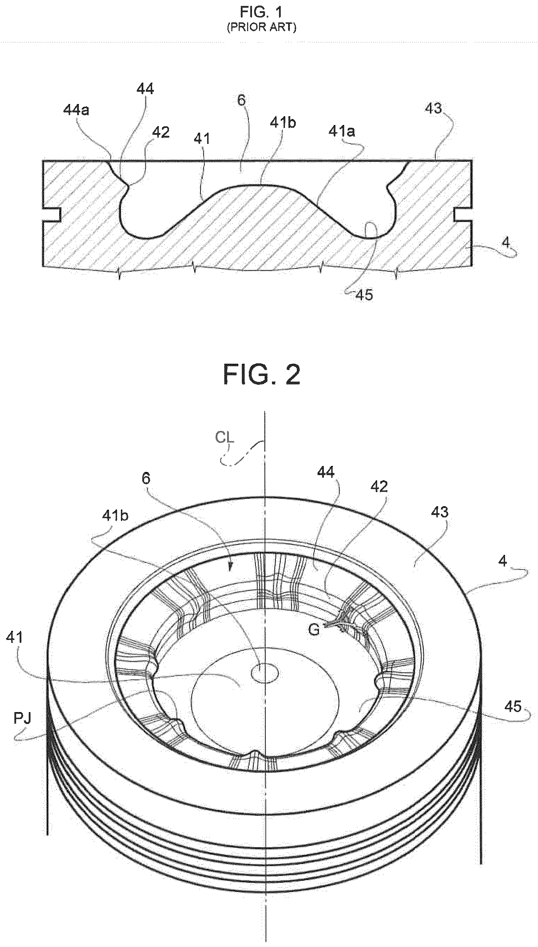

Figure 2 discloses perspective view of an engine piston 4 according to a preferred implementation of the present invention.

The engine piston 4, in the following "piston", has a reentrant cavity 6, axially symmetric and preferably rotational symmetric according to a center line axis CL. Preferably the entire upper portion of the piston has a rotational symmetry, thus the center line axis is rotational axis for both the upper portion of the piston and the cavity 6.

The cavity includes an annular lip 42 defining a smallest shrinkage, preferably a smallest diameter, at a position below a piston crown surface 43 and a bottom cavity portion 45.

A raised portion 41 is formed at a center of the bottom portion of the cavity and tapered towards its top portion, preferably shaped as a frustum of a cone. The height position of a top surface 41b is generally similar to the height position of the annular lip.

The slope of the lateral surface of the raised portion 41 can vary according to the characteristics of the fuel injector (not disclosed).

A pseudo-toroidal volume is defined between the frusto-conical portion and the annular lip.

The annular lip 42 divides the cavity into said pseudo-toroidal volume and an enlarged inlet portion 44 of the cavity defined by surface bounded by said crown surface 43, tapered towards the bottom portion of the cavity. The intersection between said enlarged portion and the crown surface 43 defines an inlet profile, which preferably is a circumference.

According to the invention, along the annular lip projecting elements PJ are arranged, at the annular lip, to deflect gas flow/flame-jet by inducing their local acceleration into four directions.

Therefore, such projecting elements PJ define deflecting means.

Said projecting elements are fairly distributed along the annular lip 42 profile.

The number of such projecting elements PJ can be any, pair or odd.

However, they are fairly distributed along the periphery of the lip profile lying on a plane belonging to a sheaf of planes construed on the piston center-line.

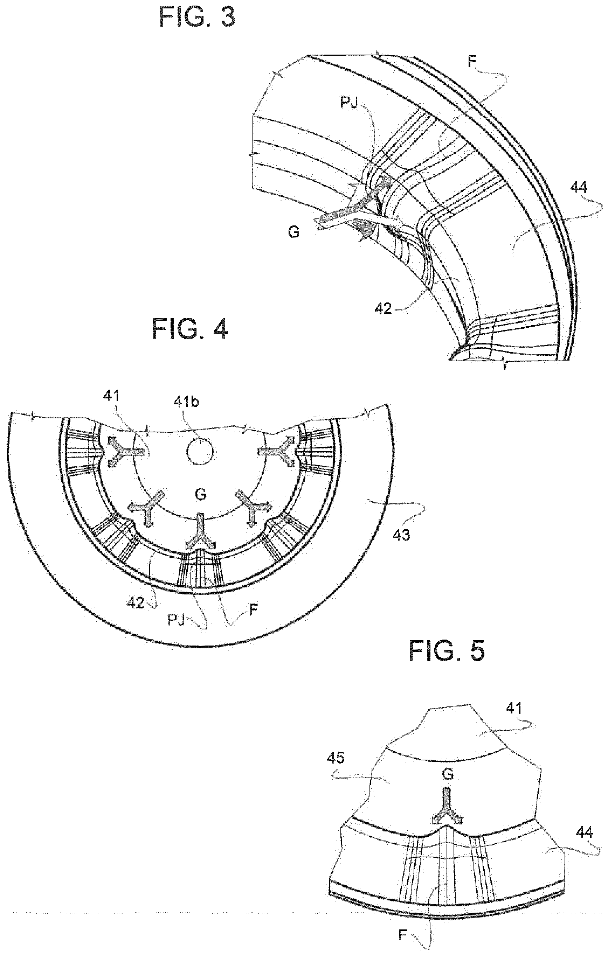

Figures 2 - 5 indicate the gas flow or flame-jet with the letter G.

This flow is split by each of any projecting element by inducing a local flow acceleration.

According to a preferred implementation of the invention, such projecting elements are as ring or flat circular sectors portions laying within as much axial planes belonging to said sheaf of planes.

The aim is to split the flow into four sub-flows due to the projecting element in conjunction of the annular lip.

According to the invention, "at the annular lip" means that the each projecting element has an elongated shape and the central portion of such elongated shape falls on the rib of the annular lip.

Also the partial rings or flat circular sectors if rectified define elongated elements that, more or less, follow the shape of the piston from the enlarged inlet portion towards the bottom of the cavity, crossing the annular lip.

The partial rings are smoothly adjoined with the shape of the annular lip and are fully contained within the cavity.

In other words, such projecting element are below the crown surface of the piston.

Each of said projecting elements are adjoined with the enlarged inlet portion 44 of the cavity by defining smooth fins or ribs F.

Smooth fins can be present also from the annular lip to towards the bottom portion 45 of the cavity, but remaining far from the base of the raised portion.

The diesel engine comprises a multi-hole fuel injection nozzle disposed coaxially with said centerline axis.

Thanks to the present invention, within the chamber the gas flows and/or the flame-jets are accelerated by permitting a faster burning of the charge.

The present invention relates also to an internal combustion engine comprising a cylinder and a piston coupled with said cylinder and a crankshaft connected with said piston though a conrod.

Further implementation details will not be described, as the man skilled in the art is able to carry out the invention starting from the teaching of the above description.

## Claims

1. Engine piston (4) comprising a reentrant cavity (6), axially symmetric according to a center line axis (CL), the cavity including a bottom portion (45) and an enlarged inlet portion (44); the piston comprising
- an annular lip (42) defining a shrinkage of the cavity at a position below a piston crown surface (43) so as to axially separate said bottom portion (45) from said enlarged inlet portion (44),
- a raised portion (41) formed at a center of the bottom portion (45), tapered towards a relating top portion, and
- projecting elements (PJ) fairly distributed along said annular lip (42), at the annular lip,
wherein each of said projecting elements (PJ) comprises an elongated element lying on an axial plane belonging to a sheaf of planes construed on said center line axis (CL); wherein each of said projecting elements (PJ) projects from said annular lip (42) into said cavity (6) towards said center line axis (CL) so as to split, in use, a respective gas flow into four sub-flows due to the projecting element in conjunction with the annular lip;
wherein each of said projecting elements defines a flat circular sector smoothly adjoined to said annular lip;
wherein said bottom portion (45) defines a pseudo-toroidal volume, and said enlarged inlet portion (44) is defined by a surface, tapered towards said bottom portion (45), **characterized in that** each of said projecting elements defines a smooth fin (F);
each of said projecting elements being adjoined with said enlarged portion (44) of said cavity (6) by defining said smooth fin (F).

2. Piston according to claim 1, wherein each of said projecting elements (PJ) partly lays within the enlarged inlet portion (44) defined between the annular lip and the piston crown surface (43), and partly lays within the bottom portion (45) so as to define a lower end portion of the projecting element, wherein said lower end portions are spaced apart from a base of said raised portion (41).

3. Piston according to any of previous claims, wherein said cavity (6) has an overall rotational symmetry over said center line axis (CL) and said raised portion defines a frustum of a cone.

4. Piston according to any one of the previous claims, wherein said bottom portion (45) is substantially flat such that an annular lateral surface is defined between the annular lip and the bottom cavity, and wherein the lower end portion of each projecting element is fully contained in said lateral surface.

5. Piston according to any one of previous claims, wherein the piston has an overall rotational symmetry over said center line axis (CL).

6. Combustion engine comprising at least one engine piston (4) according to any of the previous claims.

7. Combustion engine according to claim 6, further comprising an injector, laying on said center line axis (CL).

8. Combustion engine according to claim 6, wherein said injector is suitable to produce at least one set of spray cones oriented according to the directors of a cone and equally angularly spaced between each other.

9. Vehicle comprising the combustion engine according to any one of the claims 6 to 8.

## Patentansprüche

1. Kraftmaschinenkolben (4), der einen einspringenden Hohlraum (6) umfasst, der gemäß einer Mittelachse (CL) axial symmetrisch ist, wobei der Hohlraum einen Bodenabschnitt (45) und einen vergrößerten Einlassabschnitt (44) enthält und der Kolben Folgendes umfasst:
- eine ringförmige Lippe (42), die eine Schrumpfung des Hohlraums bei einer Position unter einer Kolbenbodenfläche (43) definiert, um den Bodenabschnitt (45) vom vergrößerten Einlassabschnitt (44) axial zu trennen,
- einen angehobenen Abschnitt (41), der bei einem Zentrum des Bodenabschnitts (45) so ausgebildet ist, dass er sich zu einem in Beziehung stehenden Deckabschnitt verjüngt, und
- vorstehende Elemente (PJ) bei der ringförmigen Lippe, die entlang der ringförmigen Lippe (42) ideal verteilt sind, wobei jedes der vorstehenden Elemente (PJ) ein langgestrecktes Element umfasst, das in einer axialen Ebene liegt, die einem Bündel von Ebenen angehört, die an der Mittelachse (CL) ausgelegt sind; wobei
jedes der vorstehenden Elemente (PJ) von der ringförmigen Lippe (42) in den Hohlraum (6) zur Mittelachse (CL) vorsteht, um im Betrieb einen jeweiligen Gasdurchfluss aufgrund des vorstehenden Elements in Verbindung mit der ringförmigen Lippe in vier Unterströme zu teilen;
jedes der vorstehenden Elemente einen flachen kreisförmigen Sektor definiert, der an die ringförmige Lippe glatt angrenzt; und
der Bodenabschnitt (45) ein pseudoringförmiges Volumen definiert und der vergrößerte Einlassabschnitt (44) durch eine Oberfläche definiert ist, die sich zum Bodenabschnitt (45) verjüngt,
**dadurch gekennzeichnet, dass** jedes der vorstehenden Elemente eine glatte Lamelle (F) definiert und
jedes der vorstehenden Elemente durch Definieren der glatten Lamelle (F) an den vergrößerten Abschnitt (44) des Hohlraums (6) angrenzt.

2. Kolben nach Anspruch 1, wobei jedes der vorstehenden Elemente (PJ) teilweise in dem vergrößerten Einlassabschnitt (44) liegt, der zwischen der ringförmigen Lippe und der Kolbenbodenfläche (43) definiert ist, und teilweise im Bodenabschnitt (45) liegt, um einen unteren Endabschnitt des vorstehenden Elements zu definieren, wobei die unteren Endabschnitte von einer Basis des angehobenen Abschnitts (41) beabstandet sind.

3. Kolben nach einem der vorhergehenden Ansprüche, wobei der Hohlraum (6) eine Gesamtrotationssymmetrie um die Mittelachse (CL) besitzt und der angehobene Abschnitt einen Pyramidenstumpf eines Konus definiert.

4. Kolben nach einem der vorhergehenden Ansprüche, wobei der Bodenabschnitt (45) im Wesentlichen flach ist, derart, dass eine ringförmige Seitenfläche zwischen der ringförmigen Lippe und dem Bodenhohlraum definiert ist, und der untere Endabschnitt jedes vorstehenden Elements in der Seitenfläche vollständig enthalten ist.

5. Kolben nach einem der vorhergehenden Ansprüche, wobei der Kolben eine Gesamtrotationssymmetrie um die Mittelachse (CL) aufweist.

6. Brennkraftmaschine, die mindestens einen Kraftmaschinenkolben (4) nach einem der vorhergehenden Ansprüche umfasst.

7. Brennkraftmaschine nach Anspruch 6, die ferner einen Injektor umfasst, der auf der Mittelachse (CL) liegt.

8. Brennkraftmaschine nach Anspruch 6, wobei der Injektor geeignet ist, mindestens einen Satz Sprühnebelkoni zu erzeugen, die gemäß in Richtung eines Konus orientiert sind und in Winkelrichtung gleichmäßig voneinander beabstandet sind.

9. Fahrzeug, das die Brennkraftmaschine nach einem der Ansprüche 6 bis 8 umfasst.

## Revendications

1. Piston de moteur (4) comprenant une cavité (6) réentrante, axialement symétrique selon un axe linéaire central (CL), la cavité comportant une partie inférieure (45) et une partie d'entrée élargie (44) ; le piston comprenant
- une lèvre annulaire (42) définissant un rétrécissement de la cavité au niveau d'une position au-dessous d'une surface de couronne de piston (43) de manière à séparer axialement ladite partie inférieure (45) de ladite partie d'entrée élargie (44),
- une partie surélevée (41) formée au niveau d'un centre de la partie inférieure (45), effilée en direction d'une partie supérieure associée,
et
- des éléments en saillie (PJ) répartis équitablement le long de ladite lèvre annulaire (42), au niveau de la lèvre annulaire,
dans lequel chacun desdits éléments en saillie (PJ) comprend un élément allongé se trouvant sur un plan axial faisant partie d'un paquet de plans interprétés sur ledit axe linéaire central (CL) ;
dans lequel chacun desdits éléments en saillie (PJ) fait saillie de ladite lèvre annulaire (42) à l'intérieur de ladite cavité (6) en direction dudit axe linéaire central (CL) de manière à diviser, lors d'une utilisation, un flux de gaz respectif en quatre sous-écoulements en raison de l'élément en saillie conjointement avec la lèvre annulaire ;
dans lequel chacun desdits éléments en saillie définit un secteur circulaire plat doucement adjoint à ladite lèvre annulaire ;
dans lequel ladite partie inférieure (45) définit un volume pseudo-toroïdal, et ladite partie d'entrée élargie (44) est définie par une surface, effilée en direction de ladite partie inférieure (45),
**caractérisé en ce que** chacun desdits éléments en saillie définit une ailette douce (F) ;
chacun desdits éléments en saillie étant adjoint à ladite partie élargie (44) de ladite cavité (6) en définissant ladite ailette douce (F).

2. Piston selon la revendication 1, dans lequel chacun desdits éléments en saillie (PJ) repose en partie dans la partie d'entrée élargie (44) définie entre la lèvre annulaire et la surface de couronne de piston (43), et repose en partie dans la partie inférieure (45) de manière à définir une partie d'extrémité inférieure de l'élément en saillie, dans lequel lesdites parties d'extrémité inférieures sont espacées les unes des autres à partir d'une base de ladite partie surélevée (41) .

3. Piston selon l'une quelconque des revendications précédentes, dans lequel ladite cavité (6) présente une symétrie rotationnelle totale au-dessus dudit axe linéaire central (CL) et ladite partie surélevée définit un tronc d'un cône.

4. Piston selon l'une quelconque des revendications précédentes, dans lequel ladite partie inférieure (45) est sensiblement plate de telle sorte qu'une surface latérale annulaire est définie entre la lèvre annulaire et la cavité inférieure, et dans lequel la partie d'extrémité inférieure de chaque élément en saillie est entièrement contenue dans ladite surface latérale.

5. Piston selon l'une quelconque des revendications précédentes, dans lequel le piston présente une symétrie rotationnelle totale au-dessus dudit axe linéaire central (CL).

6. Moteur à combustion interne comprenant au moins un piston de moteur (4) selon l'une quelconque des revendications précédentes.

7. Moteur à combustion interne selon la revendication 6, comprenant en outre un injecteur, reposant sur ledit axe linéaire central (CL).

8. Moteur à combustion interne selon la revendication 6, dans lequel ledit injecteur est adapté pour produire au moins un ensemble de cônes de pulvérisation orientés en fonction des directeurs d'un cône et espacés angulairement de manière égale entre eux.

9. Véhicule comprenant le moteur à combustion interne selon l'une quelconque des revendications 6 à 8.
